(19)

Europäisches
Patentamt
European
Patent Office
Office européen
des brevets

(11) **EP 3 402 081 A1**

(12) **EUROPEAN PATENT APPLICATION**

(43) Date of publication:
**14.11.2018 Bulletin 2018/46**

(51) Int Cl.:
**H04B 1/02** (2006.01)

(21) Application number: **17170652.6**

(22) Date of filing: **11.05.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Intel Corporation
Santa Clara, CA 95054 (US)**

(72) Inventor: **BREUN, Peter
80807 München (DE)**

(74) Representative: **Lambsdorff & Lange
Patentanwälte
Partnerschaft mbB
Grillparzerstraße 12A
81675 München (DE)**

(54) **TECHNIQUES FOR DETERMINING UNKNOWN PILOT SIGNAL POWERS IN A RECEIVE SIGNAL**

(57) The disclosure relates to a receiver device, comprising: a receiver configured to receive a signal (y) comprising pilot signal contributions of a serving cell and at least one interfering cell, wherein the pilot signal contributions have unknown signal power; a processor configured to determine an estimate of the unknown signal powers of the pilot signal contributions based on a correlation ($\hat{R}_{yy}$) of the receive signal (y), a channel estimate ($\hat{H}_s$) of the serving cell and at least one channel estimate ($\hat{H}_I$) of the at least one interfering cell.

Fig. 2

EP 3 402 081 A1

## Description

### FIELD

This disclosure relates to techniques for determining unknown signal powers of pilot signal contributions in a receive signal. In particular, this disclosure relates to signal and noise power estimation for baseband signal processing in a mobile receiver such as a 3G-HSDPA (third generation high speed downlink packet access) receiver.

### BACKGROUND

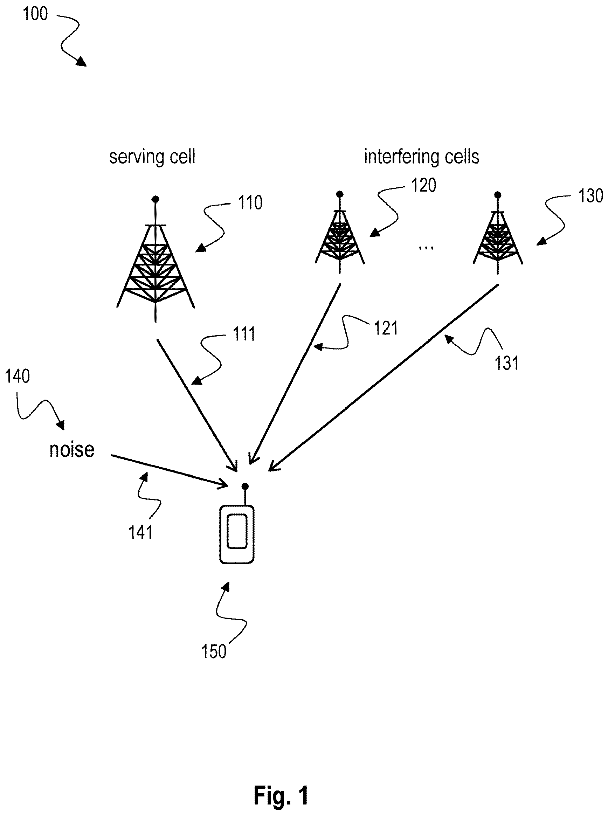

In wireless communications systems 100 as shown in Fig. 1 the mobile device 150 receives a signal 111 from a serving cell 110 which is interfered by signals 121, 131 from interfering cells 120, 130 and noise 140. Accurate estimates of signal, interference and noise power are essential for the design of optimal equalizers like the LMMSE (Linear Minimum Mean Square Error) equalizer which is used in multiple mobile communication standards like HSDPA, for example. Especially for 3G, the determination of the required power levels is not trivial. The reason for this lies in the fact that the power of the transmitted pilot channel (which is the only fully known reference channel) provides no information about the total (useful) transmit power of a base station since the latter can select this power freely without any signaling to a receiving UE (user equipment).

Hence there is a need for an efficient signal and noise power estimation in a mobile device, in particular for baseband signal processing in a 3G-HSDPA receiver.

### BRIEF DESCRIPTION OF THE DRAWINGS

The accompanying drawings are included to provide a further understanding of embodiments and are incorporated in and constitute a part of this specification. The drawings illustrate embodiments and together with the description serve to explain principles of embodiments. Other embodiments and many of the intended advantages of embodiments will be readily appreciated as they become better understood by reference to the following detailed description.

Fig. 1 is a schematic diagram illustrating an exemplary wireless communication system 100 with a mobile device 150 receiving a signal 111 from a serving cell 110 which is interfered with signals 121, 131 from interfering cells 120, 130 and noise 140.

Fig. 2 is a block diagram of an exemplary receiver device 200 of a mobile device according to an implementation.

Fig. 3 is a block diagram of an exemplary receiver circuit 300 of a mobile device according to an implementation.

Fig. 4 is a schematic diagram illustrating a least squares approach 400 for determining the unknown signal powers of the pilot signal contributions in a receive signal.

Fig. 5 is a schematic diagram of an exemplary method 500 for determining unknown signal powers of pilot signal contributions in a receive signal.

### DETAILED DESCRIPTION

In the following detailed description, reference is made to the accompanying drawings, which form a part thereof, and in which is shown by way of illustration specific aspects in which the invention may be practiced. It is understood that other aspects may be utilized and structural or logical changes may be made without departing from the scope of the present invention. The following detailed description, therefore, is not to be taken in a limiting sense, and the scope of the present invention is defined by the appended claims.

The following terms, abbreviations and notations will be used herein:

3G:          Third Generation mobile networks
UMTS:      Universal Mobile Telecommunication System
LTE:         Long Term Evolution
HSDPA:     High Speed Downlink Packet Access
LMMSE:     Linear Minimum Mean Square Error
CPICH:      Common Pilot Channel

The methods and devices described herein may be based on radio devices. It is understood that comments made in connection with a described method may also hold true for a corresponding device configured to perform the method and vice versa. For example, if a specific method step is described, a corresponding device may include a unit to perform the described method step, even if such a unit is not explicitly described or illustrated in the figures. Further, it is understood that the features of the various exemplary aspects described herein may be combined with each other, unless specifically noted otherwise.

The methods and devices described herein may be implemented in wireless communication networks, in particular communication networks based on mobile communication standards such as UMTS and LTE, in particular 3G-HSDPA and beyond, in particular communication standards in which a power of a pilot signal sent by the base station is not required to be signaled to the mobile device. High Speed Downlink Packet Access (HSDPA) is an enhanced 3G (third-generation) mobile communications protocol in the High-Speed Packet Access (HSPA) family, which allows networks based on Universal Mobile Telecommunications System (UMTS) to have higher data speeds and capacity. The described devices may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

The methods and devices described herein may be configured to transmit and/or receive radio signals. Radio signals may be or may include radio frequency signals radiated by a radio transmitting device (or radio transmitter or sender). The frequency range may correspond to frequencies of alternating current electrical signals used to produce and detect radio waves.

The methods and devices described herein may be configured to apply the correlation matrix of the receive signal and channel covariance matrices to determine the unknown signal powers of the pilot signal contributions in the receive signal. The correlation matrix of the received signal is commonly modeled as the sum of the channel covariance matrices of serving cell, interfering cells, and the noise covariance matrix. The channel covariance matrices are scaled by the transmit powers of the corresponding base stations, and the noise covariance matrix is the identity scaled by the noise power. Since normalized channel estimates are available for serving and interfering cells, the only unknowns for this model are the transmit powers and the noise power.

The overall covariance matrix (i.e., the sum described above) can be simply estimated as a sample average of the received signal. The unknown scaling of its summands can then be determined using any approximation method, e.g. a least squares approach as one example, based on the available normalized channel estimates. Other approximation methods would also be feasible, e.g. based on a norm different from the square Euclidean norm.

In the following, embodiments are described with reference to the drawings, wherein like reference numerals are generally utilized to refer to like elements throughout. In the following description, for purposes of explanation, numerous specific details are set forth in order to provide a thorough understanding of one or more aspects of embodiments. However, it may be evident to a person skilled in the art that one or more aspects of the embodiments may be practiced with a lesser degree of these specific details. The following description is therefore not to be taken in a limiting sense.

The various aspects summarized may be embodied in various forms. The following description shows by way of illustration various combinations and configurations in which the aspects may be practiced. It is understood that the described aspects and/or embodiments are merely examples, and that other aspects and/or embodiments may be utilized and structural and functional modifications may be made without departing from the scope of the present disclosure.

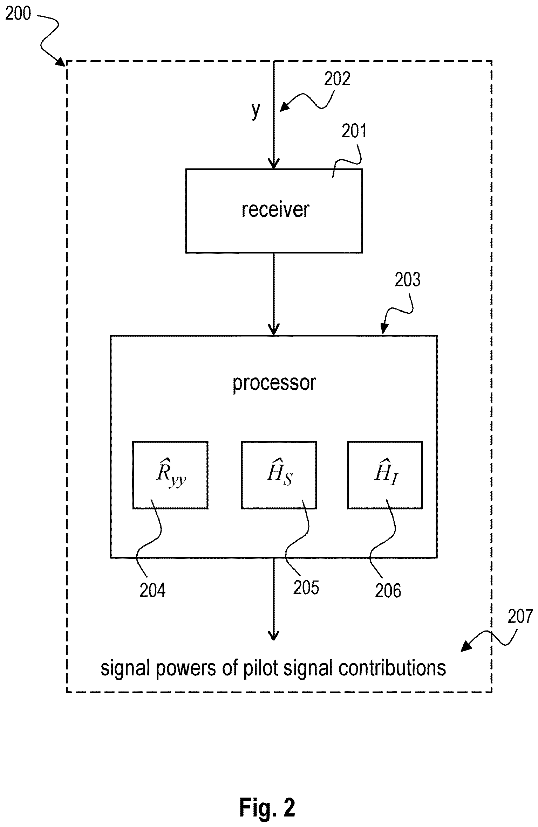

Fig. 2 is a block diagram of an exemplary receiver device 200 of a mobile device according to an implementation. The receiver device 200 includes a receiver 201 and a processor 203.

The receiver 201 is configured to receive a signal y, 202, comprising pilot signal contributions 111, 121, 131 of a serving cell 110 and at least one interfering cell 120, 130 as shown in Fig. 1. These pilot signal contributions 111, 121, 131 have unknown signal power. Using the pilot channel (CPICH), the convolutional matrices can be estimated up to the unknown scaling $E_C$ of the CPICH, e.g. as described below in paragraph [0024]. This scaling factor $E_C$ is the formal expression of the pilot signal contribution. The processor 203 is configured to determine the unknown signal powers 207 of the pilot signal contributions 111, 121, 131 based on a correlation $\hat{R}_{yy}$, 204 of the receive signal y, 202, a channel estimate $\hat{H}_S$, 205 of the serving cell 110 and at least one channel estimate $\hat{H}_I$ 206 of the at least one interfering cell 120, 130.

According to one implementation, the disclosed approach will be described in the following for an exemplary case of one serving 110 and one interfering cell 120, but it can be trivially extended to more interfering cells.

The received signal vector y in an HSDPA system can be modeled as follows (dimensions of vectors and matrices are not given here and have to be selected appropriately):

$$y = \sqrt{P_{\text{S}}}H_{\text{S}}x_{\text{S}} + \sqrt{P_{\text{I}}}H_{\text{I}}x_{\text{I}} + \sqrt{\sigma_{\text{N}}^2}\, n,$$

where $P_{\text{S}}$ and $P_{\text{I}}$, $H_{\text{S}}$ and $H_{\text{I}}$, and $x_{\text{S}}$ and $x_{\text{I}}$ are the transmit powers, the channel matrices and the transmit signals of serving and interfering cell, respectively. The channel matrices may represent a convolutional channel, for example, or any other channel, e.g. according to a non-dispersive MIMO model or any other channel model.

The noise is given by $n$ with the corresponding power $\sigma_{\text{N}}^2$. For the sake of simplicity, we assume that the covariance matrix of $x_{\text{S}}$, $x_{\text{I}}$ and $n$ is the identity, and that all three signals are uncorrelated. Let $R_{yy}$ be the correlation matrix of the received signal vector. With the assumptions above, it reads as

$$R_{yy} = P_{\text{S}}H_{\text{S}}H_{\text{S}}^{\text{H}} + P_{\text{I}}H_{\text{I}}H_{\text{I}}^{\text{H}} + \sigma_{\text{N}}^2\text{I}.$$

where $(\cdot)^{\text{H}}$ denotes Hermitian and I the identity matrix.

Most quantities in the equation can be estimated. Using the pilot channel (CPICH), the convolutional matrices are estimated up to the unknown scaling $E_{\text{C}}$ of the CPICH representing the unknown pilot signal power 111 as described above with respect to paragraph [0020] which is selected by the base station and not signaled to the receiver. Additionally, the correlation matrix of the received signal is estimated as a sample mean. Thus, we can make use of the knowledge of

$$\widehat{H}_{\text{S}} \approx \sqrt{E_{\text{C},\text{S}}}H_{\text{S}},$$

$$\widehat{H}_{\text{I}} \approx \sqrt{E_{\text{C},\text{I}}}H_{\text{I}},$$

$$\widehat{R}_{yy} = \frac{1}{K}\sum_{k=1}^{K} y_k y_k^{\text{H}}$$

to come up with the following relation:

$$\widehat{R}_{yy} \approx \frac{P_{\text{S}}}{E_{\text{C},\text{S}}}\widehat{H}_{\text{S}}\widehat{H}_{\text{S}}^{\text{H}} + \frac{P_{\text{I}}}{E_{\text{C},\text{I}}}\widehat{H}_{\text{I}}\widehat{H}_{\text{I}}^{\text{H}} + \sigma_{\text{N}}^2\text{I}.$$

See also paragraph [0023] where the exact equation is given based on the channel model, the relation above is derived from it by replacing exact values with estimates.

The unknowns are the ratios of the overall transmitted power to the CPICH power of serving and interfering cell, respectively, and the noise power. Denoting these unknowns as $z_{\text{S}}$, $z_{\text{I}}$ and $z_{\text{N}}$, their determination can be formulated as a standard least squares problem, which can be solved efficiently:

$$\min_{z_{\text{S}},z_{\text{I}},z_{\text{N}}} \left\| \widehat{R}_{yy} - z_{\text{S}}\widehat{H}_{\text{S}}\widehat{H}_{\text{S}}^{\text{H}} - z_{\text{I}}\ \widehat{H}_{\text{I}}\widehat{H}_{\text{I}}^{\text{H}} - z_{\text{N}}\text{I} \right\|_{\text{F}}^2.$$

Note that also different norms can be used here.

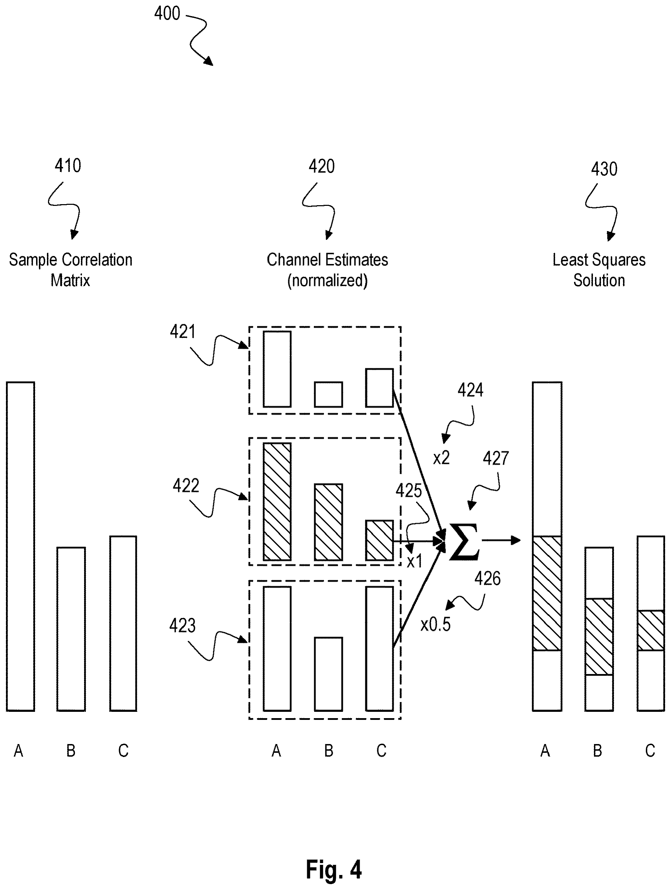

In order to illustrate the approach, Figure 4 described below provides a graphical example, for an exemplary case of three base stations and no noise (also three unknowns).

The approach described above can be implemented by the processor 203 depicted in Fig. 2 as described for the scenario of one serving cell 110 and at least one interfering cell 120, 130 in the following.

The processor 203 may be configured to determine the unknown signal powers of the pilot signal contributions based on an unknown pilot signal scaling $E_{C,S}$ of the serving cell 110 and based on at least one unknown pilot signal scaling $E_{C,I}$ of the at least one interfering cell 120, 130. The pilot signal scaling $E_{C,S}$ of the serving cell 110 may be selected by the serving cell 110 and not signaled to the receiver device 200. The pilot signal scaling $E_{C,I}$ of the at least one interfering cell 120, 130 may be selected by the at least one interfering cell 120, 130 and not signaled to the receiver device 200.

The processor 203 may be configured to determine the unknown signal powers of the pilot signal contributions based on an unknown noise power $\sigma_N^2$, e.g. a power of the noise 140 shown in Fig. 1.

The processor 203 may be configured to determine the correlation $\hat{R}_{yy}$, 204 of the receive signal y, 202 based on a sample average of the receive signal y, 202.

The processor 203 may be configured to determine the unknown signal powers of the pilot signal contributions based on a correlation matrix $\hat{R}_{yy}$, 204 of the receive signal y, 202 and channel covariance matrices $\hat{H}_S\hat{H}_S^H$, $\hat{H}_I\hat{H}_I^H$ of the serving cell 110 and the at least one interfering cell 120, 130. These channel covariance matrices $\hat{H}_S\hat{H}_S^H$, $\hat{H}_I\hat{H}_I^H$ may be formed from the channel estimate $\hat{H}_S$, 205 of the serving cell 110.

The processor 203 may be configured to determine the unknown signal powers of the pilot signal contributions based on matching contributions of the correlation matrix $\hat{R}_{yy}$, 204 resulting from the channel covariance matrices $\hat{H}_S\hat{H}_S^H$, $\hat{H}_I\hat{H}_I^H$ of the serving cell 110 and the at least one interfering cell 120, 130.

The processor 203 may be configured to determine the correlation matrix $\hat{R}yy$, 204 of the receive signal y, 202 based on a dimension greater or equal than a number of unknown components including the unknown signal powers of the pilot signal contributions and an unknown noise power.

A weight of the channel covariance matrix $\hat{H}_S\hat{H}_S^H$ of the serving cell 110 may correspond to a ratio of an overall transmit power of the serving cell to an unknown pilot signal scaling $E_{C,S}$ of the serving cell 110.

A weight of the channel covariance matrix $\hat{H}_I\hat{H}_I^H$ of the at least one interfering cell 120, 130 may correspond to a ratio of an overall transmit power of the at least one interfering cell to an unknown pilot signal scaling $E_{C,I}$ of the at least one interfering cell 120, 130.

The processor 203 may be configured to determine the unknown signal powers of the pilot signal contributions based on a least squares estimation of the channel covariance matrices $\hat{H}_S\hat{H}_S^H$, $\hat{H}_I\hat{H}_I^H$ of the serving cell 110 and the at least one interfering cell 120, 130 with respect to the correlation matrix $\hat{R}_{yy}$, 204 of the receive signal y, 202.

The processor 203 may be configured to determine the unknown signal powers of the pilot signal contributions based on the relation $\hat{R}_{yy} \approx \frac{P_S}{E_{C,S}}\hat{H}_S\hat{H}_S^H + \frac{P_I}{E_{C,I}}\hat{H}_I\hat{H}_I^H + \sigma_N^2 I$, e.g. as described above, where $\hat{R}_{yy}$ is the correlation matrix of the receive signal y, $\hat{H}_S$ is the channel estimate of the serving cell, $\hat{H}_I$ is the channel estimate of the at least one interfering cell, $E_{C,S}$ is the unknown pilot signal scaling of the serving cell, $E_{C,I}$ is the unknown pilot signal scaling of the at least one interfering cell, $\sigma_N^2$ is the unknown noise power, $P_S$ is the overall transmit power of the serving cell and $P_I$ is the overall transmit power of the at least one interfering cell.

The processor 203 may be configured to determine the unknown signal powers of the pilot signal contributions based on any approximation method, e.g. a least squares estimation as one example of the relation with respect to the unknowns $\frac{P_S}{E_{C,S}}$, $\frac{P_I}{E_{C,I}}$ and $\sigma_N^2$. Other approximation methods would also be feasible, e.g. based on a norm different from the square Euclidean norm.

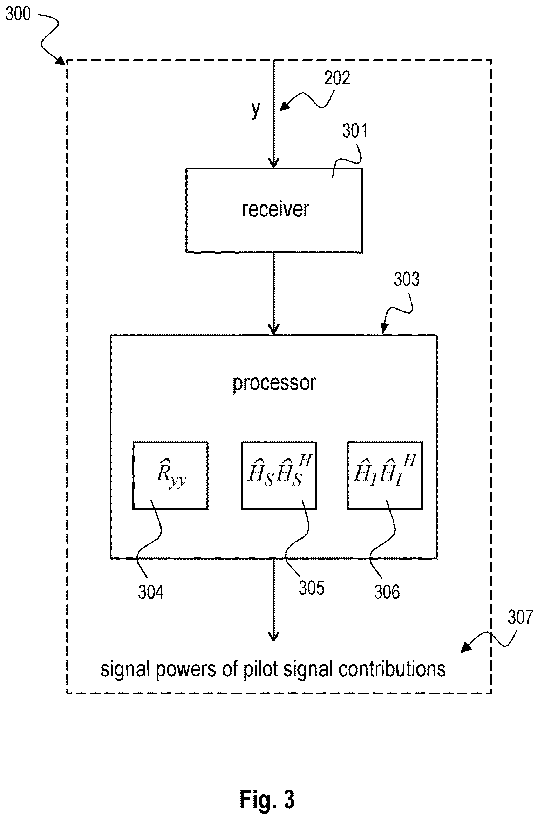

Fig. 3 is a block diagram of an exemplary receiver circuit 300 of a mobile device according to an implementation. The receiver circuit 300 includes a receiver 301 and a processor 303.

The receiver 301 is configured to receive a signal y, 202 comprising pilot signal contributions 111, 121, 131 of a serving cell 110 and at least one interfering cell 120, 130, e.g. as shown in Fig. 1, wherein the pilot signal contributions have unknown signal power.

The processor 303 is configured to determine an estimate 307 of the unknown signal powers of the pilot signal contributions based on a correlation matrix $\hat{R}_{yy}$, 304 of the receive signal y, 202 and channel covariance matrices

$\hat{H}_S\hat{H}_S^H$, 305, $\hat{H}_I\hat{H}_I^H$, 306 of the serving cell 110 and the at least one interfering cell 120, 130. The channel covariance matrix $\hat{H}_S\hat{H}_S^H$, 305 is derived from the channel estimate $\hat{H}_S$ of the serving cell. The channel covariance matrix $\hat{H}_I\hat{H}_I^H$, 306 is derived from the channel estimate $\hat{H}_I$ of the at least one interfering cell.

The pilot signal scaling $E_{C,S}$ of the serving cell 110 may be selected by the serving cell 110 and not signaled to the receiver circuit 300.

The pilot signal scaling $E_{C,I}$ of the at least one interfering cell 120, 130 may be selected by the at least one interfering cell 120, 130 and not signaled to the receiver circuit 300.

The processor 303 may be configured to determine the correlation $\hat{R}_{yy}$, 304 of the receive signal y, 202 based on a sample average of the receive signal y, 202. A sample average is just one way to estimate the correlation matrix, also other methods would be applicable.

The processor 303 may be configured to determine the estimate 307 of the unknown signal powers of the pilot signal contributions based on matching contributions of the correlation matrix $\hat{R}_{yy}$, 304 resulting from the channel covariance matrices $\hat{H}_S\hat{H}_S^H$, $\hat{H}_I\hat{H}_I^H$ 305, 306 of the serving cell 110 and the at least one interfering cell 120, 130.

The processor 303 may be configured to determine the correlation matrix $\hat{R}_{yy}$, 304 of the receive signal y, 202 based on a dimension greater or equal than a number of unknown components including the unknown signal powers of the pilot signal contributions and an unknown noise power.

Fig. 4 is a schematic diagram illustrating a least squares approach 400 for determining the unknown signal powers of the pilot signal contributions in a receive signal.

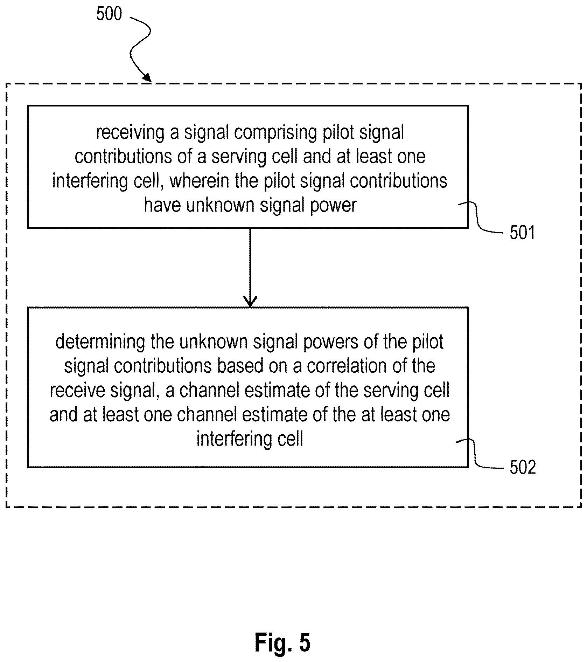

The least squares approach 400 may be applied in one of the devices 200, 300 described above with respect to Figures 2 and 3 or in a method 500 described below with respect to Fig. 5.

The scalar elements of the sample correlation matrix 410 and the channel correlation matrix 421, 422, 423 (or channel estimates 420) are depicted as bars A, B and C. The least squares approach 430 determines the appropriate scaling factors 424, 425, 426 for the channel estimates 421, 422, 423 such that the weighted sum 427 optimally fits to the sample correlation matrix 410.

It can be seen from Fig. 4 how the dimension of the correlation matrix $\hat{R}_{yy}$ needs to be chosen: it is required to be at least as large as the number of unknowns, in the presented example this is 3. A larger number leads to a better estimate due to the resulting overdetermined system of linear equations, but this also results in a larger computational complexity. It also becomes clearer how to extend this approach to a larger number of interfering base stations: another summand needs to be added to the least squares problem, and the dimension of the correlation matrix needs to be adapted if required.

Several approaches to solve the least squares problem are possible. The straight forward approach directly solves it through the solution of the corresponding system of linear equations. The computational complexity can also be distributed over time by updating the correlation matrix and channel estimates only partially and using a recursive least squares approach for an iterative solution. This approach can also be used to smooth the estimates over time to end up with a reduced variance of the power estimates. The selection of the forgetting factor in the recursive least squares method is then a design parameter to trade off estimator variance and tracking speed when the power values change.

Fig. 5 is a schematic diagram of a method 500 for determining unknown signal powers of pilot signal contributions in a receive signal.

The method 500 includes receiving 501 a signal y, 202 comprising pilot signal contributions 111, 121, 131 of a serving cell 110 and at least one interfering cell 120, 130, e.g. as shown in Figure 1, wherein the pilot signal contributions have unknown signal power. The method 500 further includes determining 502 the unknown signal powers of the pilot signal contributions based on a correlation $\hat{R}_{yy}$ of the receive signal y, a channel estimate $\hat{H}_S$ of the serving cell 110 and at least one channel estimate $\hat{H}_I$ of the at least one interfering cell 120, 130, e.g. as described above with respect to Figures 2 and 3.

The method 500 may further include: determining the unknown signal powers of the pilot signal contributions based on an unknown pilot signal scaling $E_{C,S}$ of the serving cell and based on at least one unknown pilot signal scaling $E_{C,I}$ of the at least one interfering cell, e.g. as described above with respect to Figures 2 and 3.

The method 500 may further include: determining the correlation $\hat{R}_{yy}$ of the receive signal y based on a sample average of the receive signal y, e.g. as described above with respect to Figures 2 and 3. A sample average is just one way to estimate the correlation matrix, also other methods would be applicable.

The method 500 may further include: determining the unknown signal powers of the pilot signal contributions based on a correlation matrix $\hat{R}_{yy}$ of the receive signal y and channel covariance matrices $\hat{H}_S\hat{H}_S^H$, $\hat{H}_I\hat{H}_I^H$ of the serving cell and the at least one interfering cell, e.g. as described above with respect to Figures 2 and 3.

The method 500 may further include: determining the unknown signal powers of the pilot signal contributions based on matching contributions of the correlation matrix $\hat{R}_{yy}$ resulting from the channel covariance matrices $\hat{H}_S\hat{H}_S^H$, $\hat{H}_I\hat{H}_I^H$ of the serving cell and the at least one interfering cell, e.g. as described above with respect to Figures 2 and 3.

The method 500 may further include: determining the correlation matrix $\hat{R}_{yy}$ of the receive signal y based on a dimension greater or equal than a number of unknown components including the unknown signal powers of the pilot signal contributions and an unknown noise power.

The method 500 may further include: determining the unknown signal powers of the pilot signal contributions based on the correlation matrix $\hat{R}_{yy}$ of the receive signal y, weighted versions of the channel covariance matrices $\hat{H}_S\hat{H}_S^H$, $\hat{H}_I\hat{H}_I^H$ of the serving cell and the at least one interfering cell and a noise covariance matrix.

A weight of the channel covariance matrix $\hat{H}_S\hat{H}_S^H$ of the serving cell may correspond to a ratio of an overall transmit power of the serving cell to an unknown pilot signal scaling $E_{C,S}$ of the serving cell. A weight of the channel covariance matrix $\hat{H}_I\hat{H}_I^H$ of the at least one interfering cell may correspond to a ratio of an overall transmit power of the at least one interfering cell to an unknown pilot signal scaling $E_{C,I}$ of the at least one interfering cell.

The method 500 may further include: determining the unknown signal powers of the pilot signal contributions based on the relation

$$\hat{R}_{yy} \approx \frac{P_S}{E_{C,S}}\hat{H}_S\hat{H}_S^H + \frac{P_I}{E_{C,I}}\hat{H}_I\hat{H}_I^H + \sigma_N^2 I,$$

where $\hat{R}_{yy}$ is the correlation matrix of the receive signal y, $\hat{H}_S$ is the channel estimate of the serving cell, $\hat{H}_I$ is the channel estimate of the at least one interfering cell, $E_{C,S}$ is the unknown pilot signal scaling of the serving cell, $E_{C,I}$ is the unknown pilot signal scaling of the at least one interfering cell, $\sigma_N^2$ is the unknown noise power, $P_S$ is the overall transmit power of the serving cell and $P_I$ is the overall transmit power of the at least one interfering cell, e.g. as described above with respect to Figures 2 and 3.

The method 500 may further include: determining the unknown signal powers of the pilot signal contributions based on a least squares estimation of the relation with respect to the unknowns $\frac{P_S}{E_{C,S}}$, $\frac{P_I}{E_{C,I}}$ and $\sigma_N^2$, e.g. as described above with respect to Figures 2 and 3, in particular with respect to Fig. 4.

The method 500 may further include the functionality of the devices described above with respect to Figures 2 and 3. The method 500 may be implemented with a mobile device, in particular a mobile device with a receiver device as described above with respect to Figures 2 and 3.

The methods, systems and devices described herein may be implemented as software in a Digital Signal Processor (DSP), in a micro-controller or in any other side-processor or as hardware circuit on a chip or within an application specific integrated circuit (ASIC).

Embodiments described in this disclosure can be implemented in digital electronic circuitry, or in computer hardware, firmware, software, or in combinations thereof, e.g. in available hardware of mobile devices or in new hardware dedicated for processing the methods described herein.

The present disclosure also supports a computer program product including computer executable code or computer executable instructions that, when executed, causes at least one computer to execute the performing and computing blocks described herein, in particular the method 500 or the techniques described above with respect to Figs. 2 to 4. Such a computer program product may include a computer-readable non-transitory storage medium storing program code thereon for use by a processor, the program code comprising instructions for performing any of the method 500 or the techniques as described above.

EXAMPLES

The following examples pertain to further embodiments. Example 1 is a receiver device, comprising: a receiver configured to receive a signal comprising pilot signal contributions of a serving cell and at least one interfering cell, wherein the pilot signal contributions have unknown signal power; a processor configured to determine an estimate of the unknown signal powers of the pilot signal contributions based on a correlation of the receive signal, a channel estimate of the serving cell and at least one channel estimate of the at least one interfering cell.

In Example 2, the subject matter of Example 1 can include that the pilot signal scaling of the serving cell is selected by the serving cell and not signaled to the receiver device; and that the pilot signal scaling of the at least one interfering cell is selected by the at least one interfering cell and not signaled to the receiver device.

In Example 3, the subject matter of any one of Examples 1-2 can include that the processor is configured to determine the correlation of the receive signal based on a sample average of the receive signal. Also other methods to determine the correlation matrix can be used, a sample mean is just one example.

In Example 4, the subject matter of any one of Examples 1-3 can include that the processor is configured to determine the estimate of the unknown signal powers of the pilot signal contributions based on a correlation matrix of the receive signal and channel covariance matrices of the serving cell and the at least one interfering cell.

In Example 5, the subject matter of Example 4 can include that the processor is configured to determine the estimate of the unknown signal powers of the pilot signal contributions based on matching contributions of the correlation matrix resulting from the channel covariance matrices of the serving cell and the at least one interfering cell.

In Example 6, the subject matter of any one of Examples 4-5 can include that the processor is configured to determine the correlation matrix of the receive signal based on a dimension greater or equal than a number of unknown components including the unknown signal powers of the pilot signal contributions and an unknown noise power.

In Example 7, the subject matter of any one of Examples 4-6 can include that the processor is configured to determine the estimate of the unknown signal powers of the pilot signal contributions based on the correlation matrix of the receive signal, weighted versions of the channel covariance matrices of the serving cell and the at least one interfering cell and a noise covariance matrix.

In Example 8, the subject matter of any one of Examples 4-7 can include that a weight of the channel covariance matrix of the serving cell corresponds to a ratio of an overall transmit power of the serving cell to an unknown pilot signal scaling of the serving cell; and that a weight of the channel covariance matrix of the at least one interfering cell corresponds to a ratio of an overall transmit power of the at least one interfering cell to an unknown pilot signal scaling of the at least one interfering cell.

In Example 9, the subject matter of any one of Examples 1-8 can include that the processor is configured to determine the estimate of the unknown signal powers of the pilot signal contributions based on the relation $\hat{R}_{yy} \approx$

$$\frac{P_{\mathrm{S}}}{E_{\mathrm{C,S}}} \hat{H}_{\mathrm{S}} \hat{H}_{\mathrm{S}}^{\mathbb{H}} + \frac{P_{\mathrm{I}}}{E_{\mathrm{C,I}}} \hat{H}_{\mathrm{I}} \hat{H}_{\mathrm{I}}^{\mathbb{H}} + \sigma_{\mathbb{N}}^2 \mathbb{I},$$

where $\hat{R}_{yy}$ is the correlation matrix of the receive signal y, $\hat{H}_S$ is the channel estimate of the serving cell, $\hat{H}_I$ is the channel estimate of the at least one interfering cell, $E_{C,S}$ is the unknown pilot signal scaling of the serving cell, $E_{C,I}$ is the unknown pilot signal scaling of the at least one interfering cell, $\sigma_N^2$ is the unknown noise power, $P_S$ is the overall transmit power of the serving cell and $P_I$ is the overall transmit power of the at least one interfering cell.

In Example 10, the subject matter of Example 9 can include that the processor is configured to determine the estimate of the unknown signal powers of the pilot signal contributions based on an estimation of the relation with respect to the unknowns $\dfrac{P_S}{E_{C,S}}$, $\dfrac{P_I}{E_{C,I}}$ and $\sigma_N^2$.

Example 11 is a receiver circuit, comprising: a receiver configured to receive a signal comprising pilot signal contributions of a serving cell and at least one interfering cell, wherein the pilot signal contributions have unknown signal power; a processor configured to determine an estimate of the unknown signal powers of the pilot signal contributions based on a correlation matrix of the receive signal and channel covariance matrices of the serving cell and the at least one interfering cell.

In Example 12, the subject matter of Example 11 can include that the pilot signal scaling of the serving cell is selected by the serving cell and not signaled to the receiver circuit; and that the pilot signal scaling of the at least one interfering cell is selected by the at least one interfering cell and not signaled to the receiver circuit.

In Example 13, the subject matter of any one of Examples 11-12 can include that the processor is configured to determine the correlation of the receive signal based on a sample average of the receive signal.

In Example 14, the subject matter of any one of Examples 11-13 can optionally include that the processor is configured to determine the estimate of the unknown signal powers of the pilot signal contributions based on matching contributions of the correlation matrix resulting from the channel covariance matrices of the serving cell and the at least one interfering cell.

In Example 15, the subject matter of any one of Examples 11-14 can optionally include that the processor is configured to determine the correlation matrix of the receive signal based on a dimension greater or equal than a number of unknown components including the unknown signal powers of the pilot signal contributions and an unknown noise power.

Example 16 is a method for determining an estimate of unknown signal powers of pilot signal contributions in a receive signal, the method comprising: receiving a signal comprising pilot signal contributions of a serving cell and at least one interfering cell, wherein the pilot signal contributions have unknown signal power; and determining the estimate of the unknown signal powers of the pilot signal contributions based on a correlation of the receive signal, a channel estimate of the serving cell and at least one channel estimate of the at least one interfering cell.

In Example 17, the subject matter of Example 16 can include: selecting the pilot signal scaling of the serving cell by the serving cell without signaling the selected pilot signal scaling to a receiver device; and selecting the pilot signal scaling of the at least one interfering cell by the at least one interfering cell without signaling the selected pilot signal scaling to the receiver device.

In Example 18, the subject matter of any one of Examples 16-17 can include: determining the correlation of the receive signal based on a sample average of the receive signal.

In Example 19, the subject matter of any one of Examples 16-18 can include: determining the estimate of the unknown signal powers of the pilot signal contributions based on a correlation matrix of the receive signal and channel covariance matrices of the serving cell and the at least one interfering cell.

In Example 20, the subject matter of Example 19 can include: determining the estimate of the unknown signal powers of the pilot signal contributions based on matching contributions of the correlation matrix resulting from the channel covariance matrices of the serving cell and the at least one interfering cell.

In Example 21, the subject matter of any one of Examples 19-20 can include: determining the correlation matrix of the receive signal based on a dimension greater or equal than a number of unknown components including the unknown signal powers of the pilot signal contributions and an unknown noise power.

In Example 22, the subject matter of any one of Examples 19-21 can include: determining the estimate of the unknown signal powers of the pilot signal contributions based on the correlation matrix of the receive signal, weighted versions of the channel covariance matrices of the serving cell and the at least one interfering cell and a noise covariance matrix.

In Example 23, the subject matter of any one of Examples 19-22 can include that a weight of the channel covariance matrix of the serving cell corresponds to a ratio of an overall transmit power of the serving cell to an unknown pilot signal scaling of the serving cell; and that a weight of the channel covariance matrix of the at least one interfering cell corresponds to a ratio of an overall transmit power of the at least one interfering cell to an unknown pilot signal scaling of the at least one interfering cell.

In Example 24, the subject matter of any one of Examples 19-23 can include: determining the estimate of the unknown signal powers of the pilot signal contributions based on an estimation of the channel covariance matrices of the serving cell and the at least one interfering cell with respect to the correlation matrix of the receive signal.

In Example 25, the subject matter of any one of Examples 16-24 can include: determining the estimate of the unknown signal powers of the pilot signal contributions based on the relation

$$\hat{R}_{yy} \approx \frac{P_{\mathrm{S}}}{E_{\mathrm{C,S}}} \hat{H}_{\mathrm{S}} \hat{H}_{\mathrm{S}}^{\mathbb{H}} + \frac{P_{\mathrm{I}}}{E_{\mathrm{C,I}}} \hat{H}_{\mathrm{I}} \hat{H}_{\mathrm{I}}^{\mathbb{H}} + \sigma_{\mathrm{N}}^{2} \mathrm{I},$$

where $\hat{R}_{yy}$ is the correlation matrix of the receive signal y, $\hat{H}_S$ is the channel estimate of the serving cell, $\hat{H}_I$ is the channel estimate of the at least one interfering cell, $E_{C,S}$ is the unknown pilot signal scaling of the serving cell, $E_{C,I}$ is the unknown pilot signal scaling of the at least one interfering cell, $\sigma_N^2$ is the unknown noise power, $P_S$ is the overall transmit power of the serving cell and $P_I$ is the overall transmit power of the at least one interfering cell.

In Example 26, the subject matter of Example 25 can include: determining the estimate of the unknown signal powers of the pilot signal contributions based on a least squares estimation of the relation with respect to the unknowns $\frac{P_S}{E_{C,S}}$, $\frac{P_I}{E_{C,I}}$ and $\sigma_N^2$.

Example 27 is a device for determining an estimate of unknown signal powers of pilot signal contributions in a receive signal, the device comprising: means for receiving a signal comprising pilot signal contributions of a serving cell and at least one interfering cell, wherein the pilot signal contributions have unknown signal power; and means for determining the estimate of the unknown signal powers of the pilot signal contributions based on a correlation of the receive signal, a channel estimate of the serving cell and at least one channel estimate of the at least one interfering cell.

In Example 28, the subject matter of Example 27 can include: means for determining the estimate of the unknown signal powers of the pilot signal contributions based on a correlation matrix ($\hat{R}_{yy}$) of the receive signal (y) and channel covariance matrices $(\hat{H}_S \hat{H}_S^H, \quad \hat{H}_I \hat{H}_I^H)$ of the serving cell and the at least one interfering cell.

Example 29 is a wireless communication system, comprising: a serving cell, configured to transmit a pilot signal without signaling a signal power of the pilot signal; at least one interfering cell, configured to transmit a pilot signal without signaling a signal power of the pilot signal; and a receiver device, comprising: a receiver configured to receive a signal comprising pilot signal contributions of the serving cell and the at least one interfering cell; a processor configured to determine an estimate of signal powers of the pilot signal contributions based on a correlation of the receive signal, a channel estimate of the serving cell and at least one channel estimate of the at least one interfering cell.

In Example 30, the subject matter of Example 29 can include that the processor is configured to determine the estimate of the signal powers of the pilot signal contributions based on a correlation matrix of the receive signal (y) and channel covariance matrices of the serving cell and the at least one interfering cell.

Example 31 is a computer readable non-transitory medium on which computer instructions are stored which when executed by a computer cause the computer to perform the method of any one of Examples 16 to 26.

In addition, while a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Furthermore, it is understood that aspects of the disclosure may be implemented in discrete circuits, partially integrated circuits or fully integrated circuits or programming means. Also, the terms "exemplary", "for example" and "e.g." are merely meant as an example, rather than the best or optimal.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

**Claims**

1. A receiver device, comprising:

   a receiver configured to receive a signal (y) comprising pilot signal contributions of a serving cell and at least one interfering cell, wherein the pilot signal contributions have unknown signal power;
   a processor configured to determine an estimate of the unknown signal powers of the pilot signal contributions based on a correlation ($\hat{R}_{yy}$) of the receive signal (y), a channel estimate ($\hat{H}_S$) of the serving cell and at least one channel estimate ($\hat{H}_I$) of the at least one interfering cell.

2. The receiver device of claim 1,
   wherein a pilot signal scaling ($E_{C,S}$) of the serving cell is selected by the serving cell and not signaled to the receiver device; and
   wherein a pilot signal scaling ($E_{C,I}$) of the at least one interfering cell is selected by the at least one interfering cell and not signaled to the receiver device.

3. The receiver device of claim 1 or 2,
   wherein the processor is configured to determine the correlation ($\hat{R}_{yy}$) of the receive signal (y) based on a sample average of the receive signal (y).

4. The receiver device of one of the preceding claims,

wherein the processor is configured to determine the estimate of the unknown signal powers of the pilot signal contributions based on a correlation matrix ($\hat{R}_{yy}$) of the receive signal (y) and channel covariance matrices (

$$\hat{H}_S \hat{H}_S^H , \quad \hat{H}_I \hat{H}_I^H$$

) of the serving cell and the at least one interfering cell.

5. The receiver device of claim 4,
   wherein the processor is configured to determine the estimate of the unknown signal powers of the pilot signal contributions based on matching contributions of the correlation matrix ($\hat{R}_{yy}$) resulting from the channel covariance matrices of the serving cell and the at least one interfering cell.

6. The receiver device of claim 4 or 5,
   Wherein the processor is configured to determine the correlation matrix ($\hat{R}_{yy}$) of the receive signal (y) based on a dimension greater or equal than a number of unknown components including the unknown signal powers of the pilot signal contributions and an unknown noise power.

7. The receiver device of one of claims 4 to 6,
   wherein the processor is configured to determine the estimate of the unknown signal powers of the pilot signal contributions based on the correlation matrix ($\hat{R}_{yy}$) of the receive signal (y), weighted versions of the channel covariance matrices $(\hat{H}_S \hat{H}_S^H , \quad \hat{H}_I \hat{H}_I^H)$ of the serving cell and the at least one interfering cell and a noise covariance matrix.

8. The receiver device of one of claims 4 to 7,
   wherein a weight of the channel covariance matrix ( $\hat{H}_S \hat{H}_S^H$ ) of the serving cell corresponds to a ratio of an overall transmit power of the serving cell to an unknown pilot signal scaling ($E_{C,S}$) of the serving cell; and
   wherein a weight of the channel covariance matrix ( $\hat{H}_I \hat{H}_I^H$ ) of the at least one interfering cell corresponds to a ratio of an overall transmit power of the at least one interfering cell to an unknown pilot signal scaling ($E_{C,I}$) of the at least one interfering cell.

9. The receiver device of one of the preceding claims,
   wherein the processor is configured to determine the estimate of the unknown signal powers of the pilot signal contributions based on the relation

$$\hat{R}_{yy} \approx \frac{P_S}{E_{C,S}} \widehat{H}_S \widehat{H}_S^H + \frac{P_I}{E_{C,I}} \widehat{H}_I \widehat{H}_I^H + \sigma_N^2 \mathrm{I},$$

where $\hat{R}_{yy}$ is the correlation matrix of the receive signal y, $\hat{H}_S$ is the channel estimate of the serving cell, $\hat{H}_I$ is the channel estimate of the at least one interfering cell, $E_{C,S}$ is the unknown pilot signal scaling of the serving cell, $E_{C,I}$ is the unknown pilot signal scaling of the at least one interfering cell, $\sigma_N^2$ is the unknown noise power, $P_S$ is the overall transmit power of the serving cell and $P_I$ is the overall transmit power of the at least one interfering cell.

10. The receiver device of claim 9,
    wherein the processor is configured to determine the estimate of the unknown signal powers of the pilot signal contributions based on an estimation of the relation with respect to the unknowns $\frac{P_S}{E_{C,S}}$, $\frac{P_I}{E_{C,I}}$ and $\sigma_N^2$.

11. A method for determining an estimate of unknown signal powers of pilot signal contributions in a receive signal, the method comprising:

receiving a signal (y) comprising pilot signal contributions of a serving cell and at least one interfering cell, wherein the pilot signal contributions have unknown signal power; and

determining an estimate of the unknown signal powers of the pilot signal contributions based on a correlation $(\hat{R}_{yy})$ of the receive signal (y), a channel estimate $(\hat{H}_S)$ of the serving cell and at least one channel estimate $(\hat{H}_I)$ of the at least one interfering cell.

12. The method of claim 11,

selecting the pilot signal scaling $(E_{C,S})$ of the serving cell by the serving cell without signaling the selected pilot signal scaling $(E_{C,S})$ to a receiver device; and

selecting the pilot signal scaling $(E_{C,I})$ of the at least one interfering cell by the at least one interfering cell without signaling the selected pilot signal scaling ( $E_{C,I}$) to the receiver device.

13. The method of claim 11 or 12, comprising:

determining the correlation $(\hat{R}_{yy})$ of the receive signal (y) based on a sample average of the receive signal (y).

14. The method of one of claims 11 to 13, comprising:

determining the estimate of the unknown signal powers of the pilot signal contributions based on a correlation matrix $(\hat{R}_{yy})$ of the receive signal (y) and channel covariance matrices $( \hat{H}_S \hat{H}_S^H , \quad \hat{H}_I \hat{H}_I^H )$ of the serving cell and the at least one interfering cell.

15. A computer readable non-transitory medium on which computer instructions are stored which when executed by a computer cause the computer to perform the method of any one of claims 11 to 14.

**Fig. 1**

200

202

y

201

receiver

203

processor

$\widehat{R}_{yy}$    $\widehat{H}_S$    $\widehat{H}_I$

204       205       206

207

signal powers of pilot signal contributions

**Fig. 2**

300

202

y

301

receiver

303

processor

$\widehat{R}_{yy}$

$\widehat{H}_S\widehat{H}_S^H$

$\widehat{H}_I\widehat{H}_I^H$

304

305

306

307

signal powers of pilot signal contributions

**Fig. 3**

**Fig. 4**

500

receiving a signal comprising pilot signal contributions of a serving cell and at least one interfering cell, wherein the pilot signal contributions have unknown signal power

501

determining the unknown signal powers of the pilot signal contributions based on a correlation of the receive signal, a channel estimate of the serving cell and at least one channel estimate of the at least one interfering cell

502

**Fig. 5**

Europäisches
Patentamt

European
Patent Office

Office européen
des brevets

# EUROPEAN SEARCH REPORT

**Application Number**

EP 17 17 0652

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/156670 A1 (JONSSON ELIAS [SE] ET AL) 4 June 2015 (2015-06-04) | 1,2,4-8, 11,12, 14,15 | INV. H04B1/02 |
| Y | * paragraph [0063] - paragraph [0068] * <br> * paragraph [0012] * <br> ----- | 9,10 | |
| X | EP 1 197 007 A1 (ERICSSON INC [US]) 17 April 2002 (2002-04-17) <br> * paragraph [0048] * <br> ----- | 1-3, 11-13,15 | |
| Y | US 2003/031234 A1 (SMEE JOHN EDWARD [US] ET AL) 13 February 2003 (2003-02-13) <br> * paragraph [0160] - paragraph [0176] * <br> ----- | 9,10 | |
| A | "Universal Mobile Telecommunications System (UMTS); Feasibility study on the mitigation of the effect of Common Pilot Channel (CPICH) interference at the user equipment (3GPP TR 25.991 version 5.1.0 Release 5); ETSI TR 125 991", IEEE, LIS, SOPHIA ANTIPOLIS CEDEX, FRANCE, vol. 3-R4, no. V5.1.0, 1 December 2002 (2002-12-01), XP014015763, ISSN: 0000-0001 <br> * Section 4 * <br> * Section 5.2.1.4 * <br> ----- | 1-15 | TECHNICAL FIELDS SEARCHED (IPC) <br><br> H04B <br> H04L |

The present search report has been drawn up for all claims

| Place of search | Date of completion of the search | Examiner |
|---|---|---|
| Munich | 22 September 2017 | Lefeure, Guillaume |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...............................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 17 17 0652

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2017

| Patent document cited in search report | | Publication date | Patent family member(s) | | Publication date |
|---|---|---|---|---|---|
| US 2015156670 | A1 | 04-06-2015 | US | 2015156670 A1 | 04-06-2015 |
| | | | WO | 2015082327 A1 | 11-06-2015 |
| EP 1197007 | A1 | 17-04-2002 | AT | 272272 T | 15-08-2004 |
| | | | AU | 4998900 A | 31-01-2001 |
| | | | CN | 1371551 A | 25-09-2002 |
| | | | DE | 60012531 D1 | 02-09-2004 |
| | | | DE | 60012531 T2 | 04-08-2005 |
| | | | EP | 1197007 A1 | 17-04-2002 |
| | | | HK | 1049929 A1 | 10-06-2005 |
| | | | IL | 147211 A | 11-02-2007 |
| | | | JP | 4464020 B2 | 19-05-2010 |
| | | | JP | 2003503879 A | 28-01-2003 |
| | | | US | 6714585 B1 | 30-03-2004 |
| | | | WO | 0101595 A1 | 04-01-2001 |
| US 2003031234 | A1 | 13-02-2003 | AT | 472195 T | 15-07-2010 |
| | | | AU | 2002365239 A1 | 02-09-2003 |
| | | | BR | 0209807 A | 07-02-2006 |
| | | | CN | 1533641 A | 29-09-2004 |
| | | | CN | 1921325 A | 28-02-2007 |
| | | | CN | 101383633 A | 11-03-2009 |
| | | | CN | 101494472 A | 29-07-2009 |
| | | | EP | 1404175 A2 | 07-04-2004 |
| | | | JP | 5575859 B2 | 20-08-2014 |
| | | | JP | 2005515738 A | 26-05-2005 |
| | | | JP | 2009260968 A | 05-11-2009 |
| | | | JP | 2013062817 A | 04-04-2013 |
| | | | KR | 20040002968 A | 07-01-2004 |
| | | | KR | 20090041454 A | 28-04-2009 |
| | | | TW | 564608 B | 01-12-2003 |
| | | | US | 2003031234 A1 | 13-02-2003 |
| | | | US | 2006120439 A1 | 08-06-2006 |
| | | | WO | 03061380 A2 | 31-07-2003 |

EPO FORM P0459

For more details about this annex : see Official Journal of the European Patent Office, No. 12/82